**Europäisches Patentamt**

**European Patent Office**

**Office européen des brevets**

(19)

(11) Veröffentlichungsnummer : **0 043 475 B1**

(12) **EUROPÄISCHE PATENTSCHRIFT**

(45) Veröffentlichungstag der Patentschrift :
13.06.84

(21) Anmeldenummer : **81104723.2**

(22) Anmeldetag : **19.06.81**

(51) Int. Cl.³ : **G 02 B 7/26**, G 02 B 5/174

(54) Verfahren zur Herstellung einer integrierten mikrooptischen Vorrichtung zur Verwendung mit Multimode-Lichtfasern.

(30) Priorität : **27.06.80 DE 3024104**

(43) Veröffentlichungstag der Anmeldung :
**13.01.82 Patentblatt 82/02**

(45) Bekanntmachung des Hinweises auf die Patenterteilung : **13.06.84 Patentblatt 84/24**

(84) Benannte Vertragsstaaten :
**FR GB IT SE**

(56) Entgegenhaltungen :
**DE-A- 1 572 769**
**DE-A- 2 418 644**
**DE-A- 2 608 789**
**DE-B- 2 151 781**
**DE-B- 2 710 311**
**US-A- 3 387 909**
**US-A- 3 614 198**
**US-A- 4 178 066**
**SOVIET JOURNAL OF QUANTUM ELECTRONICS, Band 4, Nr. 8, Februar 1975, V.I. BRYANTSEV et al. "Thin-film metallized dielectric waveguides" Seiten 966 to 968**

(73) Patentinhaber : **Firma Carl Zeiss**
**D-7920 Heidenheim (Brenz) (DE)**

(72) Erfinder : **Kartzow, Manfred, Dipl.-Phys.**
**Taunusstrasse 13**
**D-6330 Wetzlar 21 (DE)**
Erfinder : **Kersten, Ralf Th., Prof. Dr.**
**Hildegardstrasse 2a**
**D-1000 Berlin 12 (DE)**
Erfinder : **Stelzner, Dieter, Ing. grad.**
**Dorfstrasse 15**
**D-8951 Leniau (DE)**

## Beschreibung

Die vorliegende Erfindung betrifft ein Verfahren nach dem Oberbegriff des Anspruchs 1.

In den letzten Jahren konnten elektronische Anordnungen in sehr starkem Maße miniaturisiert werden. Daraus ist auch der Wunsch entstanden optische Vorrichtungen zu miniaturisieren, insbesondere seit in zunehmendem Umfang lichtleitende Fasern zur Lichtführung Verwendung finden.

Aus der DE-A 26 08 789 ist eine Kopplung zur Verbindung zweier Lichtleitfasern bekannt, bei der jede Lichtleitfaser auf einem Substrat angeordnet ist, das eine lichtleitende Schicht von der Dicke des Faserkerns trägt. Diese Schicht ist so gestaltet, daß der lichtführende Querschnitt der Lichtleitfaser aufgeweitet wird. Dazu ist die lichtleitende Schicht mit einer Ausnehmung versehen, die sich trichterförmig in Richtung auf die Stoßfläche des Substrats erweitert. Diese Ausnehmung kann mit einem Material ausgefüllt sein, das transparent ist und einen höheren Brechungsindex aufweist als die umgebende lichtleitende Schicht. Es ist auch möglich am erweiterten Ende der Ausnehmung eine optische Linse vorzusehen, die zur Abbildung des Lichtleitfaserendes nach Unendlich dient. Die Brechkraft einer solchen Linse hängt ab vom Unterschied der Brechungsindices der aneinandergrenzenden Materialien sowie von der Form der Grenzfläche.

Ein solches Koppelelement, einschließlich der abbildenden Linsen läßt sich photolitographisch herstellen. Dazu wird auf das Substrat eine photoempfindliche Schicht aus transparentem Material aufgebracht und durch eine Maske hindurch belichtet. Die durch Belichtung nicht gehärteten Bestandteile werden anschließend herausgelöst. Die sich so ergebenden Ausnehmungen werden dann mit einem transparenten Material mit hohem Brechungsindex aufgefüllt.

Dieses bekannte Herstellverfahren ist ziemlich aufwendig, da zur Herstellung eines Unikats alle Verfahrensschritte nacheinander ablaufen müssen.

Es ist nun die Aufgabe der vorliegenden Erfindung ein Verfahren zur Herstellung von integrierten mikrooptischen Vorrichtungen zu schaffen, das es ermöglicht von einem Original eine Vielzahl von Kopien herzustellen, ohne daß die Qualität verschlechtert wird.

Diese Aufgabe wird durch das im Kennzeichen des Anspruchs 1 angegebene Verfahren gelöst.

Bei diesem Verfahren wird also eine Zwischenform aus Kautschuk verwendet mit deren Hilfe es möglich ist Fertigprodukte herzustellen, ohne jedesmal eine Belichtung über Masken vornehmen zu müssen.

Die Kautschukform ist in jeder Richtung dehnbar und man kann damit die Maske um etwa 10 % variieren um die Dimensionierung des Endprodukts zu ändern oder auch um Maskenfehler zu korrigieren.

Zudem hat es sich gezeigt, daß es unter Verwendung einer Kautschuk-Zwischenform möglich ist Kantenrauhigkeiten beim fertigen Produkt mit Sicherheit zu vermeiden.

Das Verfahren nach der Erfindung wird im folgenden anhand der Figuren 1 bis 6 der beigefügten Zeichnungen näher erläutert. Im einzelnen zeigen:

Figur 1 eine Draufsicht auf eine nach dem erfindungsgemäßen Verfahren hergestellte mikrooptische Vorrichtung;

Figur 2 einen Schnitt entlang der Linien II-II der Fig. 1;

Figur 3 einen Schnitt durch ein als optischer Hohlleiter ausgebildetes Ausführungsbeispiel einer mikrooptischen Vorrichtung;

Figur 4a-h die einzelnen Verfahrensschritte bei der Herstellung einer mikrooptischen Vorrichtung nach dem erfindungsgemäßen Verfahren;

Figur 5a und b die Herstellung eines optischen Hohlleiters;

Figur 6 einen Schnitt durch eine Vorrichtung mit einem als Linse ausgebildeten Schichtwellenleiter.

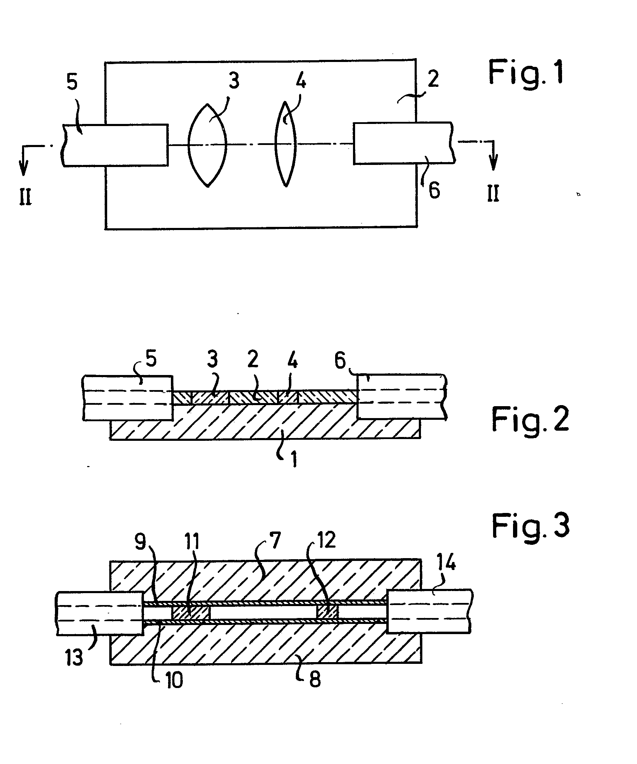

Bei der mikrooptischen Vorrichtung nach Fig. 1 und 2 ist auf ein Substrat 1 eine wellenleitende Schicht aufgebracht, die aus zwei aneinandergrenzenden Substanzen mit unterschiedlichem Brechungsindex besteht. In die Substanz 2, deren Brechungsindex höher ist als derjenige des Substrates 1 ist eine zweite Substanz eingelagert, deren Grenzflächen zur Substanz 2 so geformt sind, daß die beiden Linsen 3 und 4 gebildet sind. Das Substrat 1 ist mit Ausnehmungen versehen, in welche die beiden Multimode-Lichtleitfasern 5 und 6 eingelegt sind. Wie insbesondere aus der Darstellung der Fig. 2 zu erkennen ist ist die Anordnung so gewählt, daß die Dicke der Schicht 2, 3, 4 dem Kerndurchmesser der Lichtleitfasern 5 und 6 entspricht.

Im Ausführungsbeispiel der Fig. 3 sind zwei Substrate 7 und 8 vorgesehen, die jeweils mit einer Spiegelschicht 9 bzw. 10 versehen sind. Die beiden Spiegelschichten 9, 10 sind in einem Abstand voneinander angeordnet und bilden so einen optischen Hohlleiter. In diesem Hohlleiter sind an zwei Stellen Substanzen eingebracht, die jeweils an Luft grenzen und durch ihre Formgebung optische Elemente 11 und 12 bilden. Die Substrate 7, 8 weisen Ausnehmungen auf, in welche zwei Multimode-Lichtleitfasern 13 und 14 eingeführt sind.

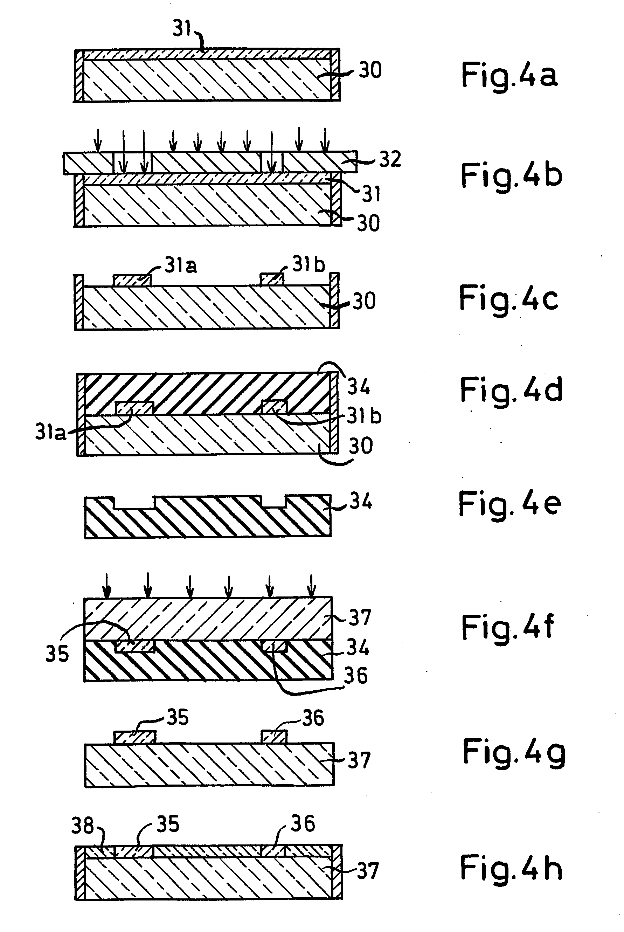

Die Fig. 4a-4d zeigen einzelne Verfahrensschritte bei der Herstellung einer Vorrichtung nach Art der Fig. 1 und 2. Zunächst wird wie in Fig. 4a dargestellt auf ein Substrat 30 eine Schicht 31 aufgebracht, die beispielsweise aus einem photosensitiven Acryl gebildet sein kann, dessen Brechungsindex höher ist als derjenige des Substrats 30.

Als nächster Schritt wird auf das Gebilde der Fig. 4a eine Maske 32 aufgelegt und die Schicht 31 wird durch diese Maske hindurch belichtet wie dies in Fig. 4b dargestellt ist. Durch die Belichtung werden die vom Licht getroffenen Bereiche der Schicht 31 gehärtet, so daß sie bei der nachfolgenden Entwicklung stehenbleiben und Substanzflecken 31a und 31b bilden, wie dies Fig. 4c zeigt.

Als nächsten Schritt wird die so hergestellte Vorform der Fig. 4c mit einer Substanz 34 übergossen, welche vorteilhaft als schnell aushärtender, keine Schrumpfung aufweisender Kautschuk ausgebildet ist. Dieser Kautschuk verbindet sich weder mit dem Substrat 30 noch mit der Substanz 31a, 31b. Durch dieses Übergießen gemäß Fig. 4d wird die Form der Fig. 4c mit hoher Genauigkeit auf Kautschuk übertragen. Die so entstehende Kautschukform gemäß Fig. 4e wird danach mit einem UV-empfindlichen Material, beispielsweise Polymethylmethacrylat ausgegossen, das in Fig. 4f mit 35 und 36 bezeichnet ist. Über dieses Gebilde wird danach ein Substrat 37 aus Glas gelegt und das ganze Gebilde wird anschließend einer UV-Belichtung unterworfen. Dabei härten die Bereiche 35 und 36 aus, die sich im übrigen mit dem Substrat 37 verbinden. Nach Ablösen der Kautschukform 34 erhält man das in Fig. 4g dargestellte Halbfertig-Produkt. Dieses Produkt wird gemäß Fig. 4h weiterverarbeitet. Dabei wird in die Räume zwischen den Bereichen 35, 36 ein hochbrechendes Material 38 beispielsweise Epoxydharz eingefüllt, wobei zweckmäßig ein Mikrodosiergerät verwendet wird mit dem die einzufüllende Menge genau eingestellt werden kann. Es entsteht schließlich die Vorrichtung nach Fig. 4h, die aus zwei Substanzen mit unterschiedlichen Brechungsindizes aufgebaut ist.

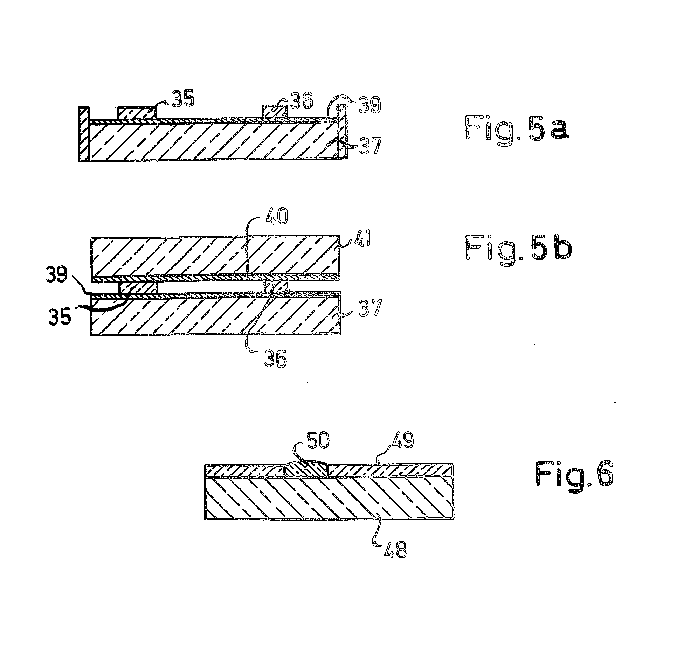

Verwendet man anstelle des Substrats 37 der Fig. 4f ein Substrat, das mit einer Spiegelschicht überzogen ist, so entsteht anstelle der Form der Fig. 4g diejenige der Fig. 5a, bei der das Substrat 37 eine Spiegelschicht 39 trägt. Legt man darüber ein Superstrat 41, das ebenfalls mit einer Spiegelschicht 40 versehen ist, so erhält man einen mikrooptischen Hohlleiter der Fig. 5b, bei dem anstelle der Substanz 38 der Fig. 4h Luft als zweite Substanz verwendet ist.

In einzelnen Anwendungsfällen kann es vorteilhaft sein eine mikrooptische Vorrichtung herzustellen, wie sie in Fig. 6 dargestellt ist. Hier ist auf einem Substrat 48 eine erste Substanz 49 aufgebracht, welche eine zweite, höher brechende Substanz 50 umfließt, welche eine Linse der in Fig. 1 dargestellten Art bildet. Man erkennt daß die Linse 50 dicker ist als die umgebende Substanzschicht 49 und daß ihre Oberfläche konvex gekrümmt ist. Dies läßt sich einfach dadurch erreichen, daß nach dem beschriebenen Verfahren die mit einer Ausnehmung versehene Schicht 49 gebildet wird, und daß beim Einfüllen der Substanz 50 in diese Ausnehmung die einzufüllende Menge etwas zu groß eingestellt wird. Die so entstehende Linse 50 ermöglicht eine Modentrennung des durch die Schicht 49, 50 geleiteten Lichtes. Niedrige Moden haben eine relativ lange Brennweite, während hohe Moden eine deutlich kürzere Brennweite haben.

**Ansprüche**

1. Verfahren zur Herstellung einer integrierten mikrooptischen Vorrichtung zur Verwendung mit Multimode-Lichtleitfasern, bei dem eine auf ein Substrat (30) aufgebrachte photoempfindliche Schicht (31) durch eine Maske (32) hindurch belichtet wird und danach die durch Belichtung nicht gehärteten Bestandteile herausgelöst werden, dadurch gekennzeichnet, daß die stehenbleibenden Bestandteile (31a, 31b) mit einem schnell aushärtenden, keine Schrumpfung aufweisenden Kautschuk (34) überschichtet werden, daß nach Ablösen der Kautschuk-Schicht (34) das in dieser vorhandene Muster mit optisch durchlässigem Material (35, 36) zur Bildung der optisch wirksamen Elemente ausgegossen und darüber ein Substrat (37) gelegt wird, und daß nach dem Erhärten des Materials (35, 36) die Kautschukschicht (34) abgenommen und die Zwischenräume mit optisch durchlässigem, hochbrechendem Material (38) aufgefüllt werden.

2. Verfahren nach Anspruch 1, dadurch gekennzeichnet, daß das in die Kautschuk-Schicht (34) eingebrachte optisch durchlässige Material (35, 36) durch UV-Belichtung aushärtbar ist.

3. Verfahren nach Anspruch 1, gekennzeichnet durch die Anwendung zur Erzeugung einer mikrooptischen Vorrichtung, die eine in einer Schicht (49) gebildete Linse (50) enthält, welche dicker ist als die angrenzende Substanzschicht und deren freie Oberfläche konvex gekrümmt ist.

**Claims**

1. Method of making an integrated micro-optical device to be used with multimode light fibres in which a photosensitive layer (31) applied to a substrate (30) is exposed through a mask (32) and thereupon the components which have not been hardened by the exposure are dissolved out, characterized in that the remaining components (31a, 31b) are coated with a rapidly hardening rubber (34) which exhibits no shrinkage, that after peeling off of the rubber layer (34) the pattern present therein is admeasured with optically transparent material (35, 36) for forming the optically active elements and a substrate (37) is placed over this structure, and that after hardening of said material (35, 36) the rubber layer is peeled off and the remaining spaces are filled with an optically transparent, highly refractive material (38).

2. Method according to claim 1, characterized in that the optically transparent material (35, 36) filled into said rubber layer is capable of being hardened by exposure to UV-light.

3. Method according to claim 1, characterized by its application for producing a micro-optical device, which contains a lens (50) formed within a layer (49), said lens being thicker than the surrounding substance-layer and its free surface having a convex curvature.

**Revendications**

1. Procédé de fabrication d'un dispositif microoptique intégré utilisable avec des fibres conductrices de lumière à modes multiples, dans lequel une couche photosensible (31) déposée sur un substrat (30) est exposée au travers d'un masque (32) et où ensuite les parties non durcies par exposition sont enlevées par dissolution, caractérisé en ce que les parties subsistantes (31a, 31b) sont revêtues d'un caoutchouc (34) durcissant rapidement et ne présentant aucun retrait, en ce que, après détachement de la couche de caoutchouc (34), le modèle existant dans celle-ci est moulé au moyen d'une matière optiquement transparente (35, 36) pour former les éléments optiquement actifs, un substrat (37) est placé dessus et, après le durcissement de la matière (35, 36), la couche de caoutchouc (34) est enlevée et les volumes intermédiaires sont remplis d'une matière (38) optiquement transparente et à grand indice de réfraction.

2. Procédé selon la revendication 1, caractérisé en ce que la matière optiquement transparente (35, 36) incorporée à la couche de caoutchouc (34) peut être durcie par exposition aux ultraviolets.

3. Procédé selon la revendication 1, caractérisé par son application à la production d'un dispositif micro-optique, qui comporte une lentille (50) formée dans une couche (49), qui est plus épaisse que la couche de substance adjacente et dont la surface libre a une incurvation convexe.

0 043 475

Fig.1

Fig.2

Fig.3

Fig.4a

Fig.4b

Fig.4c

Fig.4d

Fig.4e

Fig.4f

Fig.4g

Fig.4h

35   36   39

Fig. 5a

37

40   41

Fig. 5b

39
35   37
36

50   49

Fig. 6

48